# EUROPEAN PATENT APPLICATION

(11) **EP 1 978 441 A1**
(43) Date of publication of application: **08.10.2008**
(21) Application number: 07118618.3
(22) Date of filing: 16.10.2007
(51) Int. Cl.: G06F 9/44

(54) **System and method for updating reference to a data-source in a component-based application**

(30) Priority: 16.10.2006 CA 2564054
(71) Applicant: Research In Motion Limited, Waterloo, Ontario N2L 3W8 (CA)
(72) Inventor: Cacenco, Michael, Brampton Ontario L6Y 4X4 (CA); Goring, Bryan, Milton Ontario L9T 5V4 (CA); Kozlov, Igor, Mississauga Ontario L5L 3M1 (CA)
(74) Representative: Patel, Binesh

(57) **Abstract**

A method is provided for automatically updating a component application that reflects a current data-source description document. The method comprises the following steps. Identifying one or more differences between the current data-source description document and a new data-source description document. Automatically updating components of the component application affected by the differences in the new data-source document. A data-source update module configured to implement the steps of the method is also provided.

## Description

The present invention relates generally to a system and method for developing applications and specifically to a system and method for updating application information in accordance with updated data-source information.

### BACKGROUND OF THE INVENTION

Due to the proliferation of wireless networks, there are a continually increasing number of wireless devices in use today. These devices include mobile telephones, personal digital assistance (PDAs) with wireless communication capabilities, two-way pagers and the like. Concurrently with the increase of available wireless devices, software applications running on such devices have increased their utility. For example, the wireless device may include an application that retrieves a weather report for a list of desired cities or an application that allows a user to shop for groceries.

Such software applications take advantage of the ability to transmit data of the wireless network in order to provide timely and useful services to users, often in addition to voice communication. However, due to a plethora of different types of devices, restricted resources of some devices, and complexity of delivering large amounts of data to the devices, developing software applications remains a difficult and time-consuming task.

Accordingly, systems and methods have been created for developing component-based applications for executing on a computing device, often a wireless communication device. More details regarding component application can be found in Patent Cooperation Treaty Application Numbers PCT/CA2003/001976 entitled, "System and Method for Building and Execution of Platform-Neutral Generic Services Client Applications" and published as WO2004059938; PCT/CA2003/001980 entitled, "System and Method of Building Wireless Component Applications" and published as WO2004059957; and PCT/CA2003/001981 entitled, "System and Method of Creating and Communicating with Component Based Wireless Applications" and published as WO2004059939, each of which is assigned to the owner of the present application.

Generally speaking, an integrated development environment (IDE) is provided to allowing developers to efficiently develop such applications. One way to efficiently develop such an application is to automatically generate at least portions of the application from a data-source description document, typically published by a proprietor of a data-source, or backend server.

Therefore, a component-based application is typically tailored exactly to its data-source description document's format for exchanging messages and data. However, there is no standard solution to update a component-based application when the data-source description document changes. When a data-source description document changes, the corresponding component-based application has to be rebuilt by re-pointing to the new data-source description document. Unfortunately, using this approach loses additional elements already developed for the component-based application, making parallel development inefficient.

Accordingly there is a need for a system and method to facilitate reducing the work required for a programmer to update a component-based application when the data-source description document changes.

### BRIEF DESCRIPTION OF THE DRAWINGS

An embodiment of the invention will now be described by way of example only with reference to the following drawings in which:
- **Figure 1**: is a block diagram of a communication network infrastructure;
- **Figure 2**: is a block diagram illustrating a design tool architecture;
- **Figure 3**: is a block diagram illustrating design tool plug-ins;
- **Figure 4**: is a flowchart illustrating a method for automatically updating a component application for a new DS description document;
- **Figure 5**: is a screenshot of a graphical user interface (GUI) for entering a source address; and
- **Figure 6**: is a screenshot of a GUI for displaying detected changes to a developer

### DETAILED DESCRIPTION OF THE PREFERRED EMBODIMENT

A portion of this specification contains material that is subject to copyright protection. The copyright owner has no objection to the facsimile reproduction by anyone of the patent document, as it appears in the Patent and Trademark Office patent file or records, but otherwise reserves all copyrights whatsoever.

In accordance with one embodiment there is provided a data-source update module for executing in combination with an application design tool for facilitating updating a component application that reflects a current data-source description document, the data-source update module comprising a software module configured to: identify one or more differences between the current data-source description document and a new data-source description document; and automatically update components of the component application affected by the differences in the new data-source document.

In accordance with another embodiment there is provided a method for automatically updating a component application that reflects a current data-source description document, the method comprising the steps of : identifying one or more differences between the current data-source description document and a new data-source description document; and automatically updating components of the component application affected by the differences in the new data-source document.

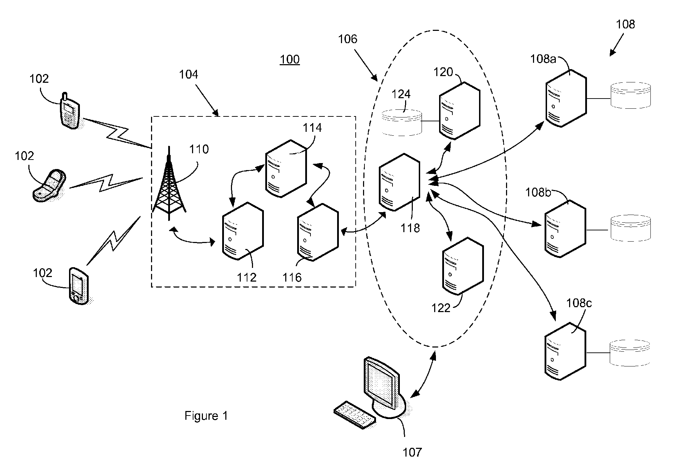

For convenience, like numerals in the description refer to like structures in the drawings. Referring to Figure 1, a communication infrastructure is illustrated generally by numeral 100. The communication infrastructure 100 comprises a plurality of communication devices 102, or simply devices 102, a communication network 104, an application gateway 106, an application development environment 107 and a plurality of backend servers 108.

The devices 102 include both wired and wireless computing devices such as a desktop computer, a laptop or other portable computer, a smart phone, a personal digital assistant (PDA), and the like. The devices 102 are in communication with the application gateway 106 via the communication network 104. Accordingly, the communication network 104 may include several components such as a wireless network 110, a relay 112, a corporate server 114 and/or a mobile data server 116 for relaying data between the devices 102 and the application gateway 106.

The application gateway 106 comprises a gateway server 118 a provisioning server 120, a discovery server 122 and a repository 124. The gateway server 118 is in communication with both the provisioning server 120 and the discovery server 122. The gateway server 110 is further in communication with a plurality of the backend servers 108, such as Web services 108a, database services 108b, as well as other enterprise services 108c, via a suitable link. For example, the gateway server 110 is connected with the Web services 108a and database services 108b via Simple Object Access Protocol (SOAP) and Java Database Connectivity (JDBC) respectively. Other types of backend servers 108 and their corresponding links will be apparent to a person of ordinary skill in the art. Accordingly, it can be seen that the gateway server 118 acts as a message broker between the devices 102 and the backend servers 108.

Each wireless device 102 is initially provisioned with a service book establishing various protocols and settings, including connectivity information for the corporate server 114 and/or the mobile data server 116. These parameters may include a Uniform Resource Locator (URL) for the application gateway server 118 as well as its encryption key. Alternatively, if the wireless device 102 is not initially provisioned with the URL and encryption key, they may be pushed to the wireless device 102 via the mobile data server 116. The mobile device 102 can then connect with the application gateway 106 via the URL of the application gateway server 118.

Applications are provided for execution on the wireless devices 102. The applications are stored in the repository 124 as a series of packages, or bundles. The packages are typically created by an application developer using a design tool provided by the application development environment 107. The design tool provides support for a drag-and-drop graphical approach for visual design of application components including screens, data elements, messages and application workflow logic, as further defined below.

The application packages are represented as structured data (XML) that can be generated automatically by the design tool through an automatic code generation process. The design tool further enables the automatically-generated code to include, or be otherwise augmented by, an industry standard scripting language, such as JavaScript or another scripting/programming language known in the art.

The availability of application packages in the repository 124 is published in a registry via a discovery service provided by the discovery server 122. It is recognized that there can be more than one repository 124 and associated registries used by the gateway server 118.

Once again, the design tool is operated in an application development environment executing on a computer. The development methodology of the design tool can be based on a visual "drag and drop" system of building application models.

The design tool can be structured as a set of plug-ins to a generic integrated design environment (IDE) framework, such as, for example, the Eclipse™ framework. Alternatively, the tool can be configured as a complete design framework without using a plug-in architecture. For exemplary purposes only, the tool will now be described as a plug-in design environment using the Eclipse™ framework.

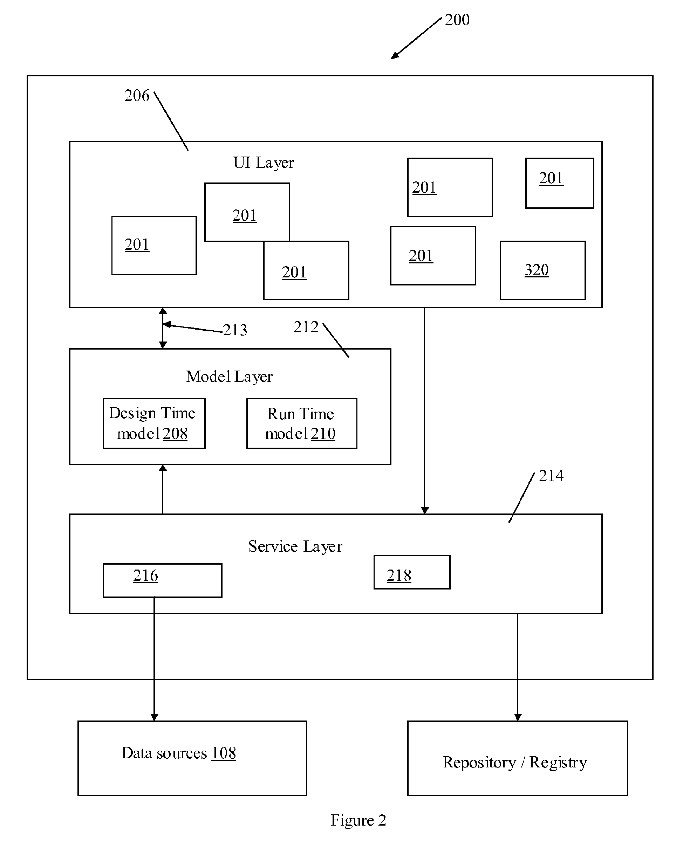

Referring to Figure 2, an overall designer tool structure for designing component applications is illustrated generally by numeral 200. In the present embodiment, the designer tool is implemented using Eclipse™. Eclipse™ is designed to support the construction of a variety of tools for application development. Further, Eclipse™ supports an unrestricted set of tool providers, including independent software vendors (ISVs) as well as tools for manipulating arbitrary content types (for example HTML, Java, C, JSP, EJB, XML, and GIF). Eclipse™ supports both GUI and non-GUI-based application development environments.

Eclipse™'s principal role is to provide tool providers with mechanisms to use and rules to follow that lead to seamlessly-integrated tools. These mechanisms are exposed via well-defined application program interface (API) interfaces, classes, and methods. Eclipse™ also provides useful building blocks and frameworks that facilitate developing new tools.

Eclipse™ comprises a plug-in architecture, wherein a plug-in is the smallest unit that can be developed and delivered separately. Usually a small tool is written as a single plug-in, whereas a complex tool has its functionality split across several plug-ins. Plug-ins are coded in Java and a typical plug-in consists of Java code in a Java Archive (JAR) library, some read-only files, and other resources such as images, Web templates, message catalogs, native code libraries, and the like.

Each plug-in has a manifest file declaring its interconnections to other plug-ins. In order to define interconnections a plug-in declares any number of named extension points, and any number of extensions to one or more extension points in other plug-ins. Eclipse™ is a well-known environment, and these and other features are thoroughly described at www.Eclipse.org.

In the present embodiment, Eclipse™ is used to enable a developer to design a component application. A component application is an application defined generally by a structured set of components, including data components, message components, presentation components and workflow components. The components are defined using a structured language and executed on a client device by an intelligent runtime container.

The data components define data entities that are used by the component application program. Examples of data entities include orders, users, and financial transactions. Data components define what information is required to describe the data entities, and in what format the information is expressed. For example, the data component may define an order comprising a unique identifier for the order, which is formatted as a number; a list of items, which are formatted as strings; the time the order was created, which has a date-time format; the status of the order, which is formatted as a string; and a user who placed the order, which is formatted according to the definition of another one of the data components. Since data elements are usually transferred by message, there is often persistence of data components in a database. Data components may be dynamically generated or defined by the application designer.

The message components define the format of messages used by the component application program to communicate with external systems such as the Web service. For example, one of the message components may describe a message for placing an order, which includes a unique identifier for the order, a status of the order, and notes associated with the order.

The presentation components define the appearance and behaviour of the component application program as it displayed to a user via a user interface. The presentation components can specify graphical user interface (GUI) screens and controls and actions to be executed when the user interacts with the component application. For example, the presentation components may define screens, labels, edit boxes, buttons and menus, and actions to be taken when the user types in an edit box or pushes a button.

The workflow components of the component application program define processing that occurs when an action is to be performed, such as an action specified by a presentation component as described above, or an action to be performed when messages arrive. Presentation workflow and message processing are defined by the workflow components. The workflow components are written as a series of instructions in either structured data or a programming language or a scripting language. The workflow component supports a correlation between message components and defines application flow as a set of rules for operations on other components.

The designer tool 200 comprises a user interface (UI) layer 206, a model layer 212 and a service layer 214. The UI layer 206 primarily comprises a collection of user modules 201, including graphical and text editors, viewers and wizards. A large majority of external interactions are accomplished through one or more of these modules, with the developer using a system of drag and drop editing and wizard-driven interaction. A secondary, non-user-facing system interface is that of backend connector, whereby the designer tool 200 can communicate with various backend servers 106, such as Web Service providers and relational databases for example. As described above, designer the tool 200 can be built on the Eclipse™ platform. Accordingly, the user modules 201 are plug-in modules 201 that extend Eclipse™ classes and utilize the Eclipse™ framework.

The UI layer 206 has access to an extensive widget set and graphics library known as the Standard Widget Toolkit (SWT) for Eclipse™. Further, the user modules 201 can utilize a higher-level toolkit called JFace that contains standard viewer classes such as lists, trees and tables and an action framework used to add commands to menus and toolbars. The designer tool 200 can also use a Graphical Editing Framework (GEF) to implement diagramming editors. The user modules 201 typically follow the Model-View-Controller design pattern where each user module 201 is both a view and a controller.

The model layer 212 includes a design-time model 208 and a runtime model 210 and represent the persistent state of the application. The separation of the layers UI layer 206 and the model layer 212 keeps presentation specific information in various views and allows multiple user modules 201 to respond to data model changes.

In the present embodiment, the data models 208,210 are based on the Eclipse™ Modeling Framework (EMF). EMF is a framework and code generation facility. The framework provides model change notification, persistence support and an efficient API for manipulating EMF objects generically. A code generation facility is used to generate the model implementation and create adapters to connect the model layer 212 with the UI layer 206.

The service layer 214 provides services for the UI layer 206 such as a validation service, localization service, generator service, build service, and deployment service.

The localization service is responsible for supporting a build-time localization of user visible strings, supporting additional localization settings (such as default time and date display format, default number display format, display currency format, and the like), and creating resource bundle files (in a JAR file) that can be used during preparation of the deployable application. For example, the localization service can be implemented as a resource module for collecting resources that are resident in the design-time model 208 for inclusion in the deployable application. The JAR file can be a file that contains the class, image, and sound files for the application gathered into a single file and compressed for efficient downloading to the wireless device.

The generator service uses the localization service to produce customized resource bundles, such as language-specific bundles, for example. The build service implements preparation of the resource bundles and packaging of them with the deployable application. The localization service interacts with the tool editors and viewers for setting or otherwise manipulating language strings and local settings of the application.

The generator service generates application XML from the defined components, generates a mapping document, optimizes field ordering of the component descriptors, and generates dependencies and script transformation as required. In order to achieve this, the generator service collaborates with the design-time model 208 to obtain the content of the developed components that comprise the application. The generator service uses the validation service to check that both the application definitions and the mapping document are viable.

The generator service then produces the application XML, with inclusions and/or augmentations of the script of the workflow components and the mapping documents from relationships held in the design-time model 208. The generator service uses the localization service to produce the language resource bundles via a resource bundle interface.

The designer tool 200 uses Eclipse™ extension points to load additional plug-ins for two types of services: backend connectors 216 and device skins 218. The backend connectors 216 define extension points for facilitating communication with different backend servers 106. The device skin 218 defines an extension point for allowing the designer tool 200 to emulate different devices 102.

The backend connectors 216 are responsible for connecting to a selected one (or more) of the backend servers, providing an interface for accessing a description of the backend data source, and/or providing for the identification of Notification services, which push notifications to the wireless device 102. The backend connector 216 provides an interface to the backend server 106 for access of the data source description, and can provide a level of abstraction between implementation specific details of the backend messaging and generic messaging descriptions maintained by the design-time model 208. For example, the backend connector 216 is used to generate appropriate messaging and data component sets for the application, and is used by a model validator to verify the validity of existing message mapping relationships in the application under development. For example, the backend connector 216 can be implemented as an interface using an API call as the protocol to access the underlying backend data source 106, for example using a Web Service Definition Language (WSDL) Interface for Web Services.

The UI Layer 206 uses a Model-View-Controller (MVC) pattern where each user module 201 can be both a viewer and a controller. As controllers, user modules 201 interact with the model layer 212 models with some related control logic as defined by the MVC pattern. In the present embodiment, both editors and viewers are examples of user modules 201 that commit changes to the models immediately upon implementation. Wizards are user modules 201 that are step-driven by a series of one or more dialog interfaces, wherein each dialog interface gathers specific information from a user of the design tool 200. Wizards 204 apply no changes to the models until confirmation is received, such as selecting a finish button.

As viewers, the user modules 201 are observers of the models and are used to interact or otherwise test and modify the models of the application. When the model data changes, the models are notified and respond by updating the presentation of the application. The design-time model 208 is the current version of the application in development and is accessed by users employing the user modules 201 to interact with the associated data of the design-time model 208. Modules 201 can also trigger validation actions on the design-time model 208. User modules 201 can also cause some or all of the application to be generated from the design-time model 208. In general, the design-time model 208 accepts a set of commands that affects the state of the model 208, and in response may generate a set of events. Each user module 201 includes the set of commands and the events that affect the module 201 and data model 208 pairing.

The design-time model 208 represents the state of an application development project and interacts with the user modules 201 by notifying user modules 201 when the state of the design-time model 208 has changed. The design-time model's 208 primary responsibility is to define an application, and, accordingly, may include: data component definitions; global variable definitions; message component definitions; resource definitions; screen component definitions; scripts; style definitions. The design-time model 208 responds to commands of each editor and/or viewer. The design-time model 208 also sends events to user modules 201 in response to changes in the design-time model 208, as well as communicating with the other modules 201 when the design-time model 208 has changed.

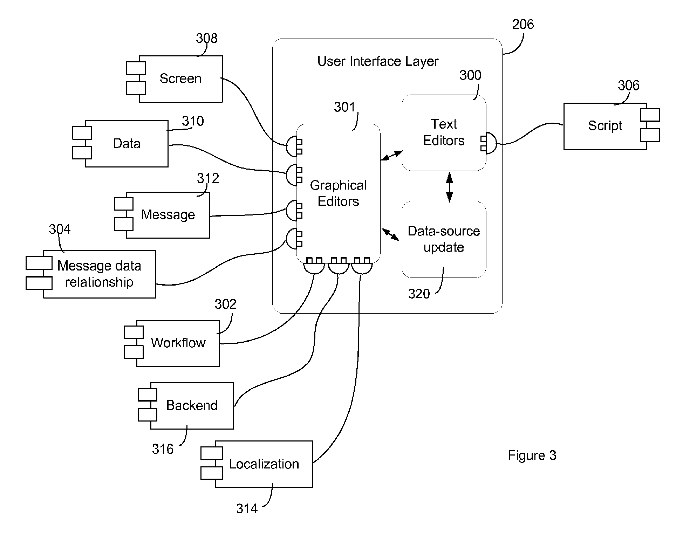

Referring to Figure 3, the distribution of user modules 201 as Eclipse™ plug-ins is shown. User modules 201 fall broadly into two categories: Text Editors 300, which implement standard line-based editing functionality; and Graphical Editing Framework (GEF) Editors 301, which provide an edit space in which to draw objects. A GEF Editor 301 in the context of the design tool 200 can contain a palette and a canvas, as is known in the art. The user can drop nodes (entities) from the palette onto the canvas and add connections to define relationships therebetween, so as to define the content and inter-relationships of the components of the application. It will be recognized that the user modules 201 are used to create and modify definitions contained in the components as well as to create and modify the interdependencies therebetween. Further, it will be recognized that the user modules 201 can be a combination of text-based and/or graphical-based modules 201, as desired.

### User Modules

As previously described, the user modules 201 are not directly aware of the design-time model 208. Generally, the user module 201 creates a command to change the design-time model 208 so that the change can be undone through an undo API (not shown). The user module 201 can be configured with an EMF core object called an editing domain that maintains a command stack. The editing domain uses the adapter factory to find an adapter that can create the command. The generated adapter class (ItemProvider) creates the command. The user module 201 executes the command by using the command stack. Further, because the ItemProvider is a notification observer, it is notified when the design-time model 208 changes. The ItemProvider in turn notifies a corresponding provider. The provider instructs the user module 201 to refresh after a change notification.

### Script Editor

The script editor 306 is a constrained text editor for providing relationships between application components. Typically, this information is provided as part of the workflow component. Some commands, such as creating functions, can be restricted such that they are not user-definable in the component application. Accordingly, when a function is created, the events generated by the script editor 306 are fixed. Other commands, such as SavesSript for example, may be edited by the script editor 306. SaveScript is used when the user saves a script of the application. In the present embodiment, SaveScript triggers the design-time model 208 events NavigationChanged, LocalizedStringChanged and ExitCodeChanged, if successful.

Further, the script editor 306 can react to events. For example, ComponentRemoved indicates whether a removed component affects input parameters to the script or globals used by the script. If the removed component affects the script, the script editor 306 prompts the user of the design tool 200 that the script is invalid.

A sample interface of the script editor extends the org.Eclipse.ui.editors extension point of the Eclipse™ framework by implementing a subclass of the org.Eclipse.ui.editors.texteditors hierarchy. The design tool 200 coordinated the creation and/or modification of scripts in the components as well as the inter-relation of the script affecting other associated components of the application.

### Screen Editor

The screen editor 308 facilitates creation and modification of the structured definition language code in the screen components associated with display of data on the device 102. UI controls for inclusion in the screen components can be dropped onto a form canvas in the editor. Control properties, including event handlers, can be edited by the screen editor 308.

Sample commands that can be edited by the screen editor 308 include the following commands. ButtonChange is sent to the design-time model 208 when the developer changes a button control. This command triggers NavigationControlChanged of the design-time model 208 if successful. MenuItemChange is sent when the developer changes a menu item. This command triggers NavigationControlChanged of the design-time model 208 if successful. ChangeScript is sent when the developer changes a script. This command triggers NavigationControlChanged of the design-time model 208 if successful. QueryMessages is sent when the developer needs a list of available messages that the screen of the application may send or refresh, and returns a list of available messages. QueryData is sent when the developer needs a list of available data objects to bind controls to and returns a list of available data. NonNavigationControlChange is sent when a control that does not affect navigation has been modified. DataBindingChange is sent when a data binding has changed. This command triggers DataBindingChanged and ScreenParameterListChanged of the data model 208 if successful.

Sample input events to the screen editor 308 include the following. An event ComponentRemoved informs the screen editor that a component to which a screen component refers has been removed. An event ComponentRenamed is similar to ComponentRemoved. An event ScreenParameterListChanged modifies the screen component if a parameter used has been modified. The screen component either adjusts that parameter or warns the developer that those dependencies are no longer valid and must be changed. An event MessageFieldChanged checks to see if a field in question is used by the screen component. An event DataFieldChanged checks to see if any controls bound to the field(s) have changed and warns the developer accordingly.

A sample interface of the screen editor 308 extends org.Eclipse.ui.editors of the Eclipse framework using the GEF GraphicalEditor and/or a VE editor. The design tool 200 coordinates the creation and/or modification of screen definitions in the screen components as well as the inter-relation of the screen definitions affecting other associated components of the application.

### Data Editor

The data editor 310 facilitates creation and modification of the structured definition language code in the data components of the application by providing the developer the ability to edit data component fields and properties. New data objects can be created from scratch, by prototyping existing data objects or based on data definition mappings to message objects in message components.

Sample commands editable by the data editor 310 include the following. AddRemoveFields is sent when the developer adds or removes a field from a data object definition. This command triggers DataFieldChanged of the data model 208 if successful. LinkToExternalData is sent when the developer links a data object definition to an external data object, such as a Calendar or Contacts data object for example. This command triggers DataFieldChanged of the data model 208 if successful.

A sample input events to the data editor 310 includes an event ComponentRemoved, which checks to see if a removed object was related to a message through prototyping or containment. The developer can then adjust the fields contained in the data object affected. An event ComponentRenamed is similar to ComponentRemoved.

A sample interface of the screen editor 308 extends org.Eclipse.ui.editors using the GEF GraphicalEditor. The design tool 200 coordinates the creation and/or modification of data definitions in the data components as well as the inter-relation of the data definitions and associated screen/message definitions affecting other associated components of the application.

### Message Editor

The message editor 312 facilitates creation and modification of the structured definition language code in the message components of the application. The message designer allows a developer to create and edit messages components for sending messages to and receiving messages from backend servers 108. These messages can include both request/response pairs as well as subscribe/notify/unsubscribe notification messages. Message definitions can be created by prototyping existing messages or by templates based on backend services of the backend servers 108. Further, the message editor provides the ability to select a reliability level for the message. As previously described, the reliability level defines how the message is to be handled at the device 102 and the application gateway 106, including delivery, acknowledgement and persistence. The message reliability can be set by an appropriate UI input mechanism such as a drop down menu or radio button selection. The message reliability can be set on a per message or per application level.

Sample commands that can be edited by the message editor 312 include AddRemoveFields, which is sent when a field is added to or remove from a message in a message component.

Sample input events to the message editor 312 include the following. An event ComponentRemoved checks to see if a component that referenced the message definition has been removed. An event ComponentRenamed is similar to ComponentRemoved. An event FieldMappingChanged checks to see if a field mapping effects the message definitions being edited.

A sample interface of the screen editor 308 extends org.Eclipse.ui.editors using the GEF GraphicalEditor. The tool design 200 coordinates the creation and/or modification of message definitions in the message components as well as the inter-relation of the created/modified message affecting other associated components of the application.

### Workflow Editor

The workflow editor 302 facilitates creating and modifying the command code in the workflow components of the application. The workflow editor 302 defines the screen-to-screen transitions that form the core of the visual part of the component application. Screens and transitions between screens due to user/script events are rendered visually.

Sample commands that can be edited by the workflow editor 302 include the following. QueryScreens is sent when the developer wants a list of screens to select from, such as when adding a new screen to the workflow. QueryScripts is sent when the developer wants a list of scripts to call on a screen navigation event. QueryArrivingMessages is sent when the developer wants a list of response messages (including notifications) on which to key screen transitions. AddComponent is sent when the developer wants to add a new screen, message or script to the workflow that doesn't already exist in the workflow. This command triggers ComponentAdded of the data model 208 if successful. ChangeNavigation is sent when the developer adds a new navigation node to the workflow. This command triggers NavigationChanged of the design-time model 208 if successful.

Sample input events to the workflow editor 302 include the following. An event ComponentRemoved checks to see if a removed component is a workflow object. The Workflow updates itself by deleting all relationships with this object definition. An event ComponentRenamed checks to see if a renamed component is a workflow object. The workflow updates its visual with the new name of the component. An event NavigationControlChanged checks to see if the workflow needs to update its view of the navigation based on a control change. If, for example, a button has been added to a screen in the workflow, then the view is updated to show the availability of a new navigation node on that screen. An event ScreenParameterListChanged checks to see if a screen's parameter list has changed and if the screen is in the workflow. The view of any navigation involving that screen is updated. An event NavigationChanged checks to see if a possible navigation change has occurred. The change is parsed and any necessary updates are made to the view. An event ExitCodeChanged checks to see if an exit point has been added/removed. The editor view is updated to reflect this visually.

A sample interface of the screen editor 308 extends org.Eclipse.ui.editors using the GEF GraphicalEditor.

### Message-Data Relationship Editor

The message editor 304 facilitates creating and modifying the structured definition language code in the inter-related message and data components of the application. The message/data relationship editor creates and edits relationships between message components and data components. These mappings effect how a data component is populated on message arrival at the device 102 when running the application. For example, data object definitions common between data and message components can exist such that the data object definitions are resident in the data component, while a data mapping definition links the message component to the data object definition in the data component is resident in the message component, or vice versa. A similar configuration can be employed for data object definitions common between screen and data components, whereby the data object definition is resident in one of the components and the data mapping definition is resident in the other associated component.

Sample commands that can be edited by the editor 304 include the following. AddComponent is sent when a new data or message is added to the relationship diagram with the effect of also adding that component to the application being developed. This command triggers ComponentAdded of the design-time model 208 if successful. QueryMessages is sent when the developer needs a list of Messages to map. QueryData is sent when the developer needs a list of Data to map. ChangeMessageLevelMapping is sent when the developer changes a message-level mapping. This command triggers FieldMappingChanged of the data model 208 if successful. ChangeFieldLevelMapping is sent when the developer changes a field-level mapping. This command triggers FieldMappingChanged of the data model 208 if successful. ChangePrototype is sent when the developer changes a prototype relationship between data objects. This command triggers FieldMappingChanged of the data model 208 if successful. ChangeContainment is sent when the developer changes a containment relationship between data objects. This command triggers MessageContainmentChanged of the data model 208 if successful.

Sample input events to the editor 304 include the following. An event ComponentRemoved checks to see if the object removed was a message or data. The relationship mapper deletes any relationships involving the removed object. An event ComponentRenamed checks to see if the renamed object is involved in any mapping relationships. The visual representation of the mapped object is updated with the new name. An event MessageFieldChanged checks to see if the message involved is present in the relationship editor. The field change is then reflected in the visual representation of the message. If the field in question is involved in a mapping, then changes are reflected and the developer may need to be warned of broken mappings if applicable. An event DataFieldChanged is similar to MessageFieldChanged except using data instead of messages.

A sample interface of the editor 304 extends org.Eclipse.ui.editors using the GEF GraphicalEditor. The design tool 200 coordinates the creation and/or modification of message/data definitions in the message/data components as well as the inter-relation of the created/modified message/data definitions affecting other associated components of the application.

### Localization Editor

The localization editor 314 allows the developer to collect all strings that will be visible to the application end-user (of the device 100) and edit them in one place. The editor 314 also allows the developer to create multiple resource mappings for each string into different languages. A sample command that can be edited by the editor 314 includes ChangeLocalizeString, which is sent when the developer adds, deletes or modifies a localized string. A sample input event to the editor 314 includes an event LocalizedStringChanged, which is used to determine when a string literal has been changed in the script editor or a label has changed in the screen editor 308. The localization editor 314 can extend the org.Eclipse.ui.editors interface by extending an EditorPart.

### Backend Visualizer Editor

The backend visualizer editor 316 shows the developer the relationships between message components and the backend servers that drive the components. The backend visualizer editor 316 also allows the developer to add new backend servers to the list of those supported by the application in development. In addition to interaction with the design-time data model 208, as is described for other modules 201 using commands and events received, the backend visualizer editor 316 collaborates with the backend connector. The backend connector 216 allows the visualizer to request a ServicesInterface from a registry of known service types. A list of services of this type is returned that can queried by name or by iteration.

Sample commands that can be edited by the editor 316 include the following. AddComponent is sent when the developer adds a new message. This command triggers ComponentAdded of the data model 208 if successful. SpecifyMapping is sent when the developer connects a message to a selected backend server 108.

Sample input events to the editor 316 include the following. An event ComponentRemoved checks to see if the component is a message. The backend visualizer adjusts its mappings for that message. An event ComponentRenamed is similar to ComponentRemoved. An event MessageFieldChanged validates the message field against what exists on the backend server 108 and notifies the developer visually of any broken mappings. Backend servers 108 are accessed through direct calls to the service layers. Optionally, background processing may be used to keep network processing from blocking UI threads. The Editor 316 can extend the org.Eclipse.ui.editors using the GEF GraphicalEditor.

### Build Service

The design tool 200 further comprises a build service for building a deployable form of the application and generates the deployable application bundle file in a JAR format, for example. The build service receives/retrieves application elements such as available application XML, mapping documents, resource bundles and resources as described above. These application elements are provided via the design tool 200 by the generator service. The build service comprises a build engine for generating the deployable application bundle. The application bundle is made available to a deployment service.

It is recognized that build service can be packaged either as part of the application development environment 107 or separately therefrom. The latter case would enable a developer to bypass using the design tool 200 to develop the component application. The developer could, therefore, still have access to the build service via an external interface for building the application bundle.

### Deployment Service

The deployment service connects to the repository 124 to deposit and/or publish a generated deployment descriptor for a given application. The deployment service also provides the available application JAR file at deployment time. Although the deployment service does not install the application JAR file, the deployment service inspects the JAR file to determine what localized components, such as which languages are supported, for example. This information can be added to the descriptor file. Similar to the build service, the deployment service can be packaged either as part of the application development environment 107 or separately therefrom.

### Data Source Update Module

The user interface layer 206 further includes a data-source (DS) update module 320. The functionality of the DS update module 320 will be described with reference to a Web Service Definition Language (WSDL) based data-source (DS) description document. The selection of WSDL for the data-source description document is a design choice and is described herein solely for exemplary purposes. A person of ordinary skill in the art will appreciate that another structured language could likewise be implemented.

WSDL is a document written in XML for describing a web service. A WSDL document specifies the location of the web service and the operations the web service exposes. Accordingly, it can be seen that WSDL provides a way to group messages into operations and operations into interfaces. It also provides a way to define bindings for each interface and protocol combination along with the endpoint address for each one. A complete WSDL definition includes all of the information used to invoke a web service. Developers that want to make it easy for others to access their web services publish their WSDL definitions.

A WSDL document defines a web service using major elements including type, message, portType, binding and service. The first three elements (types, message, and portType) are all abstract definitions of a web service interface. These elements constitute the programmatic interface that is typically interfaced with code. The last two elements (binding and service) describe the concrete details of how the abstract interface maps to messages on the wire. These details are typically handled by the underlying infrastructure.

The type element defines the data type that is used by the web service. For platform neutrality, WSDL uses XML Schema syntax to define data types. The type definitions are referenced from higher-level message definitions in order to define the structural details of a message.

The message element defines the data elements of an operation. Each message can consist of one or more parts. The parts can be compared to the parameters of a function call in a traditional programming language. A sample WSDL message element is provided below as Example 1.

```
 <message name="getTermRequest">
       <part name="term" type="xs:string"/>
 </message>
 <message name="getTermResponse">
       <part name="value" type="xs:string"/>
 </message>
```

### Example 1

In Example 1, a sample WSDL portion defining two messages is provided. A first message, named 'getTermRequest', is defined as having a parameter named 'term' which is of the type string. A second message, named 'getTermResponse', is defined as having a parameter named 'value' which of the type string.

The portType element defines a group of operations also known as an interface in most environments, so this element is also referred to as the interface element. Accordingly, the portType element correlates a web service with the operations that can be performed and the messages that are involved. A sample WSDL portType element is provided below as Example 2.

```
 <portType name="glossaryTerms">
       <operation name="getTerm">
              <input message="getTermRequest"/>
              <output message="getTermResponse"/>
       </operation>
 </portType>
```

### Example 2

In Example 2, the sample WSDL portion is provided for defining a portType element using the messages defined in Example 1. The portType element in Example 2 is named 'glossaryTerms'. The portType element includes an operation element for defining an operation of the web service. Although it is possible to have multiple operation elements for each portType element, the present example shows only one for ease of explanation. The operation element is name 'getTerm' and it uses the message 'getTermRequest' as its input and provides the message 'getTermResponse' as its output.

The binding element describes the concrete details of using a particular portType element with a given transport protocol. The binding element specifies which portType element it's describing through a type attribute. A sample WSDL binding element is provided below as Example 3.

```
 <binding type="glossaryTerms" name="b1">
 <soap:binding style="document" transport="http://schemas.xmlsoap.org/soap/http" />
        <operation>
               <soap:operation
               soapAction="http://example.com/getTerm"/>
               <input>
                      <soap:body use="literal"/>
               </input>
               <output>
                      <soap:body use="literal"/>
               </output>
        </operation>
 </binding>
```

### Example 3

In Example 3, the sample WSDL portion is provided for defining a binding element using the portType element defined in Example 2. Through its type attribute, the binding element specifies that it is describing the 'glossaryTerms' portType. The soap:binding element indicates that the message data will be bound using SOAP. The style of the service for the binding is 'document', as opposed RPC, and the transport protocol 'http'. The soap:operation element defines an HTTP header value for each operation. The soap:body element defines how message parts appear inside of the SOAP body element. In the present embodiment, the message parts appear as 'literal', although they may also appear encoded.

The service element defines a collection of ports, or endpoints, that expose a particular binding. Each of the ports is assigned a name and a binding. A sample WSDL service element is provided below as Example 4.

```
 <service name="termService">
       <port name="termEndpoint" binding="b 1 ">
              <soap:address
              location="http://localhost/getTerm/getTerm.asmx"/>
       </port>
 </service>
```

### Example 4

In Example 4, the sample WSDL portion is provided for defining a service element for exposing the binding element defined in Example 3. In the present example, the binding 'b1' is to the address "http://localhost/getTerm/getTerm.asmx". Accordingly, the service element defines a web service destination and the binding element defines the transport protocol for communicating with the web service at destination.

From the above, it will be appreciated that there are four types of communication that can be established between the application gateway and a backend server, including one-way communication, request response communication, solicit response communication and notification communication. Of the four, the request-response communication is typically the most common operation type.

For one-way communication, the web service receives a message but does not return a response. For request-response communication, the web-service receives a request and returns a response. For solicit-response communication, the web service sends a request and waits for a response. For notification communication, the web service sends a message but does not wait for a response.

The DS update module 320 is a mechanism by which an existing component-based application allows conditional and partial reuse of its current component structure by adapting the component-based application and its corresponding mapping document to a new data-source description document. In the present embodiment, the mapping document is an XML document that maps parts and elements in an application to corresponding parts and elements in the DS description document, which is defined in WSDL.

The DS update module 320 provides the ability to re-discover the DS description document by re-pointing to its old location or pointing to a new location. If the DS description document has changed, the DS update module 320 analyzes the document as follows.

The DS update module 320 recognizes a change in data type, also referred to as "re-typing", of some of its existing data parts, elements and attributes. This allows existing components to be reused even though the data type has changed. A change of data type is, for example, a change from string data to integer data. Accordingly, a change in data type may not change the data that is collected, but rather how that data is represented, as will be appreciated. Therefore, it is useful that the application may be modified or partially reused rather than rebuilt completely.

The DS update module 320 further recognizes a renaming of port-types, operations, messages, as well as parts and elements of complex-types so that existing application components can be adapted and reused. Similarly to above, a name change may not require modification to the details of the application and, therefore, it is useful to modify or partially reuse the already built application.

The DS update module 320 also recognizes changes in the array status of certain parts and elements. For example, an element particle constraint, like maxOccurs, changing from 1 to something greater than 1, or unbounded, will enable that element's array status and vice-versa. Therefore, corresponding component-based application components can be adjusted as required and reused.

The DS update module 320 recognizes deleted port-types, operations, messages, complex-types, enumerations, elements and attributes so that they can be removed from the existing component-based application and corresponding binding. This feature allows a partial reuse of the remaining components.

Once the DS update module 320 has analyzed the updated DS description document, it allows a developer to selectively accept the parts or elements that have been identified as being a re-type, re-name or delete. Therefore, it is the developer's decision whether or not to reuse or replace each of these parts or elements in the application.

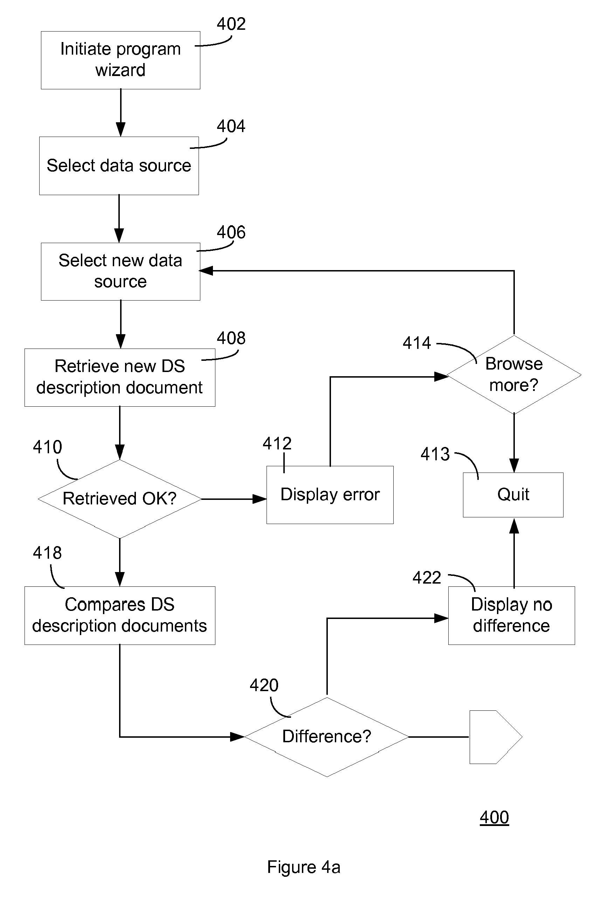

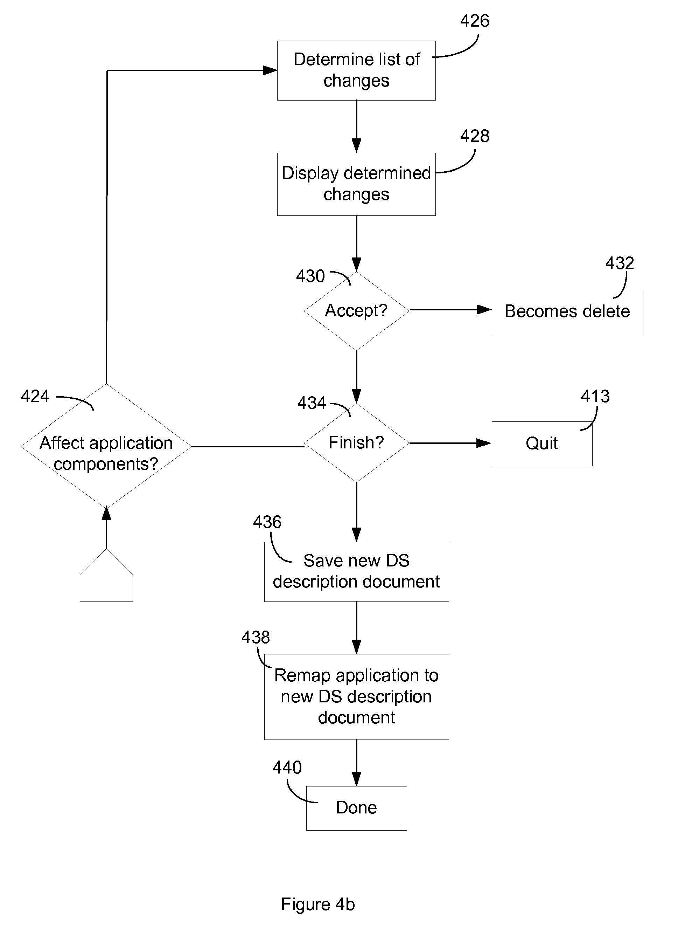

Referring to Figure 4, a flow chart illustrating operation of the DS update module 320 as it is used in conjunction with the developer tool is shown generally by numeral 400. In the present embodiment, the DS update module is implemented as a wizard. For ease of explanation, the flow chart is shown over two pages, referred to as Figure 4a and Figure 4b.

At step 402, the developer initiates a program wizard interface. A program wizard is a software automation module that facilitates implementation of a series of steps while limiting expertise required by a developer, as is known in the art. The program wizard provides the developer with a resource navigator is provided for allowing the developer to navigate through a plurality of data-sources. A data-source is a link to a location that stores a DS description document and its dependencies for an accessible application. Accordingly, the data-source may point to a local file where the DS description document and dependencies were copied. Similarly, for already deployed applications, the data-source may point directly to the target webservice, or to a custom or UDDI registry hosting a plurality of DS description documents. At step 404, the developer selects a desired data-source and requests a data-source update.

At step 406, the developer enters a source address from which to retrieve a new DS description document. As previously described, backend servers 108 that are data-source providers typically make their corresponding DS description documents available. Therefore, the source address is often the address of the corresponding backend server 108.

At step 408, the new DS description document is retrieved from the source address. At step 410 it is determined whether or not the new DS description document was successfully retrieved and that all dependencies, such as imports for example, could be resolved. If the new DS description document could not be retrieved or resolved, at step 412 an error message is displayed to the developer. At step 414 the developer is given the option to browse through alternative source locations. If the developer chooses not to do so, the DS update module 320 quits the current operation at step 413. At this point the developer could select another DS description document. Alternatively, the DS update module 320 may terminate its operation.

Returning to step 414, if the developer chooses to browse through additional resources the operation returns to step 406 and the developer is provided with an interface that allows him to browse for a new data-source address.

Returning to step 410, if the new DS description document could be successfully retrieved and resolved, the operation continues at step 418. At step 418, the DS update module 320 compares the current DS description document with the new DS description document. Specifically, the bound messages, parts and corresponding XSD schema type definitions, elements and attributes of the current DS description document are scanned and compared with corresponding parts and elements of the new DS description document.

At step 420 it is determined whether or not there is a difference between the two documents. If there is no difference, the operation continues at step 422 and the developer is advised accordingly via a graphical user interface (GUI). The DS update module 320 then quits at step 413.

Returning to step 420, if there is a difference between the two documents, the operation continues at step 424. At step 424, it is determined whether or not the new DS description document affects the components of the component application. An example of a change to the DS description document that would not affect the components of the component application is a change in URL for a service element. Such a change is implemented by a connector to a backend server and, as such, is transparent to the application in general.

If it is determined that the new DS description document does not affect the mapping of the application, the operation continues at step 434. Otherwise, the operation continues at step 426.

At step 426, the DS update module 320 determines the changes made in the new DS description document. Accordingly, a list of elements in the new DS description document that have a differing or missing corresponding value as compared with the original DS description document are determined. In step 428, the differences are tabulated and presented to the developer in an interactive GUI. The GUI presents the developer with the original data, new data, mapping type, and type of change. The GUI also provides the developer with the ability to approve or accept the determined change. This way, if the DS update suggested change is not desirable it can be rejected by the developer, becoming a standard delete change.

At step 430, for each identified change, the DS update module 320 ascertains whether or not the developer approved the previously determined changes. If the developer approves the change, a corresponding portion of application is updated and reused for the updated application. If, however, the developer does not approve the change, the operation continues to step 432. At step 432, the change becomes a delete and a corresponding portion of the application is deleted.

Once all of the suggested changes have either been approved or deleted, the operation continues to step 434. At step 434 the developer is given the option to complete the changes determined by the DS update module 320. If the developer chooses not to complete the changes, the operation continues to step 436 and quits, without changing the application or the updating the current DS description document.

If the developer chooses to complete the changes, the operation continues to step 438. At step 438, the new DS description document is saved as a new root document for providing the required WSDL description of the component application. At step 440, the application is mapped to the new DS description document. At step 442, the DS update module 320 completes its operation and the developer is returned to the development environment. When the DS update module 320 returns the developer to the development environment, it also populates a data-source viewer with any additions detected in the new DS description document. Accordingly, the developer can manually bind corresponding application components for the additions. Alternatively, as described in a co-pending application, the application design tool can automatically generate application components corresponding with the additions. The developer can then customize the automatically generated application components as desired.

Accordingly, it will be appreciated that once the developer is returned to the development environment, the developer can add application components that relate to new elements or elements for which the automatic changes by the DS update module 320 were deleted. However, application components that were unchanged or automatically updated by the DS update module 320 have been automatically updated and are available to the developer, thereby reducing the amount of time required to modify an application in response to a new DS description document.

For ease of explanation, the sample implementation of the method described with reference to Figure 4 is described as follows. For the present example, the DS description document is provided in Appendix A, the new DS description document is provided in Appendix B, a mapping document is provided in Appendix C, and a new mapping document is provided in Appendix D.

At step 402, the developer uses the resource navigator to navigate through a plurality of data-sources. At step 404, the developer selects the desired data-source, MapTest7.wsdl, by "right-clicking" on the file and selecting a data-source update option.

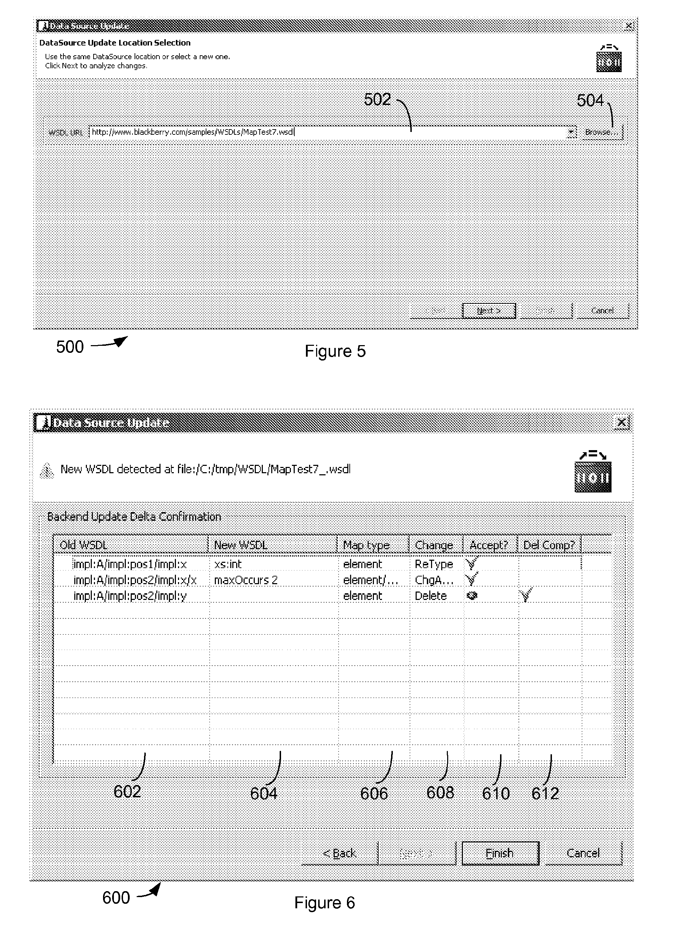

At step 406, the developer is presented with a GUI for entering a source address from which to retrieve the DS description document. Referring to Figure 5, a sample GUI for this step is illustrated generally by numeral 500. The GUI includes a text box 502 in which the developer can enter the source address. In the present example, the default source address is the selected data-source. The developer can manually enter a location of the new DS description document in the text box 502 or browse for the new DS description document by selecting a browse button 504.

At step 408, the new DS description document, MapTest7_.wsdl, is retrieved from the source address. At step 410 it is determined that the document was retrieved and could be resolved and the operation continues to step 418. At step 418, the DS update module 320 compares the current DS description document with the new DS description document. By comparing MapTest7.wsdl with MapTest7_.wsdl, it will be apparent that there are several differences.

At step 420 it is determined that since there is a difference between the two documents the operation continues at step 424. At step 424, it is determined that the new DS description document affects the component application since at least one the components of the component application relates to a change in the DS description document.

At step 426, the DS update module 320 determines the changes made in the new DS description document. Specifically, for *impl:A*/*impl:pos1*/*impl:x* the type has changed from xs:string to xs:int; for *impl:A*/*impl:pos2*/*impl:x*/*x* the constraint has changed to maxOccurs 2, which changes the status of the x element to an array; and *impl:A*/*impl:pos2*/*impl:y* has been deleted. It should also be noted that *impl:A*/*impl:pos2*/*impl:y*_ has been added. In step 428, the differences are tabulated and presented to the developer in an interactive GUI.

Referring to Figure 6, an example of a GUI for displaying the relevant information to the developer is illustrated generally by numeral 600. In the present example, the GUI includes a table having a number of columns. A first column 602 provides the element name in the current DS description document. A second column 604 provides a corresponding change in the new DS description document. For example, for the first element the change is to *"xs:int".* A third column 606 displays the type of WSDL affected by the change. A fourth column 608 displays the type of change detected. A fifth column 610 provides the developer with an input field to either accept or reject a detected change. A sixth column 612 provides the developer with an input field to confirm the deletion of the corresponding application portion, in case the change is a delete. Note that columns five 610 and six 612 are changed in context. If column six 512 is not checked, it means that the binding is adjusted but the application component portion is kept unbound by user request.

At step 430, for each identified change, the DS update module 320 ascertains whether or not the developer has approved the determined changes. Once all of the suggested changes have either been approved or switched to delete, the operation continues to step 434. At step 434 the developer is given the option to complete the changes determined by the DS update module 320.

The developer chooses to complete the changes and, at step 438, the new DS description document is saved as the new root document for providing the required WSDL description for the application. At step 440, the application is mapped to the new DS description document. At step 442, the DS update module 320 completes its operation and the developer is returned to the development environment. The DS update module 320 populates the data-source view with the addition, *impl:A*/*impl:pos2*/*impl.-y_.* At this point, the developer can create a new application component for the added *impl:A*/*impl:pos2*/*impl:y_* if so desired and bind it using another specialized wizard.

Further, although preferred embodiments of the invention have been described herein, it will be understood by those skilled in the art that variations may be made thereto without departing from the spirit of the invention or the scope of the appended claims.

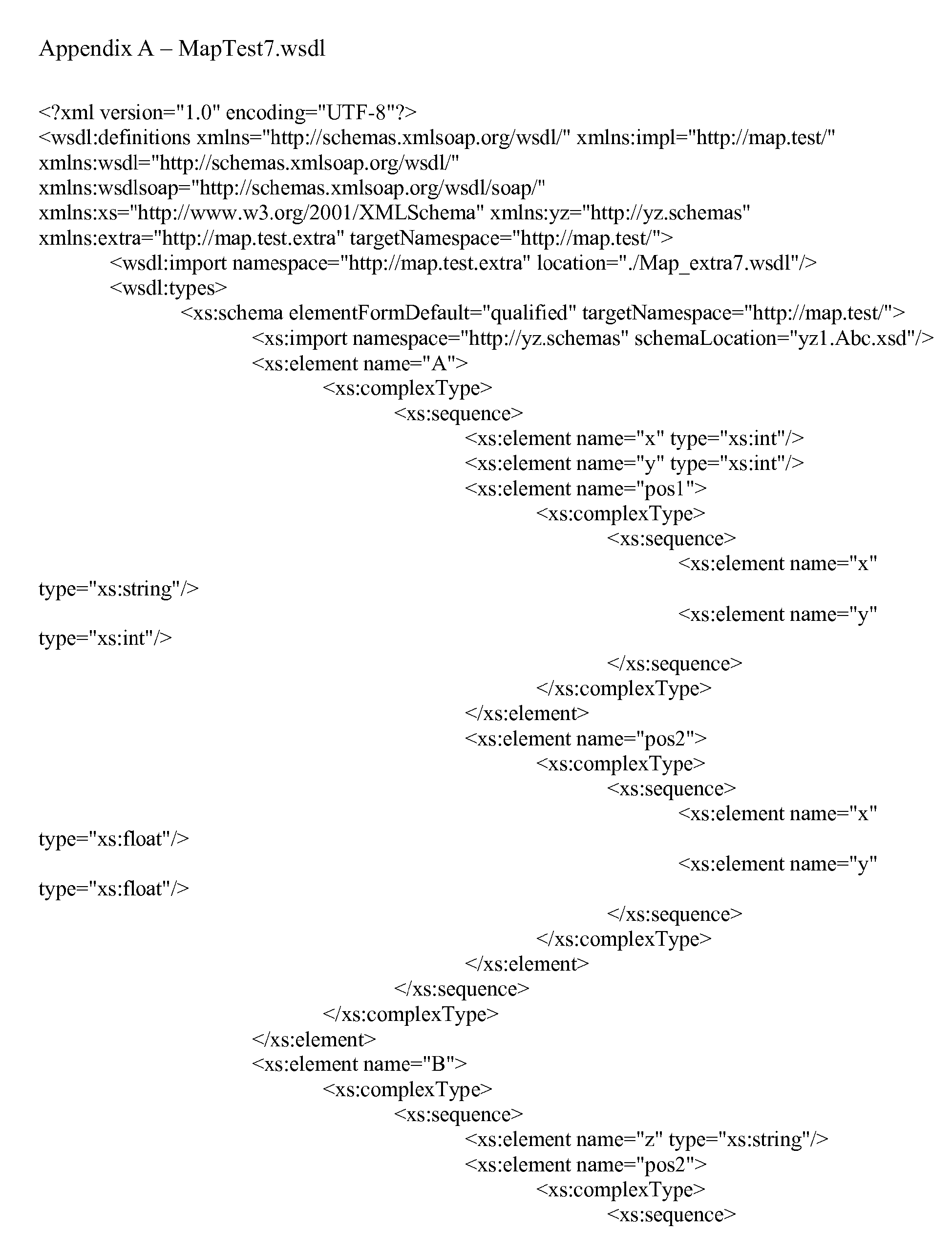

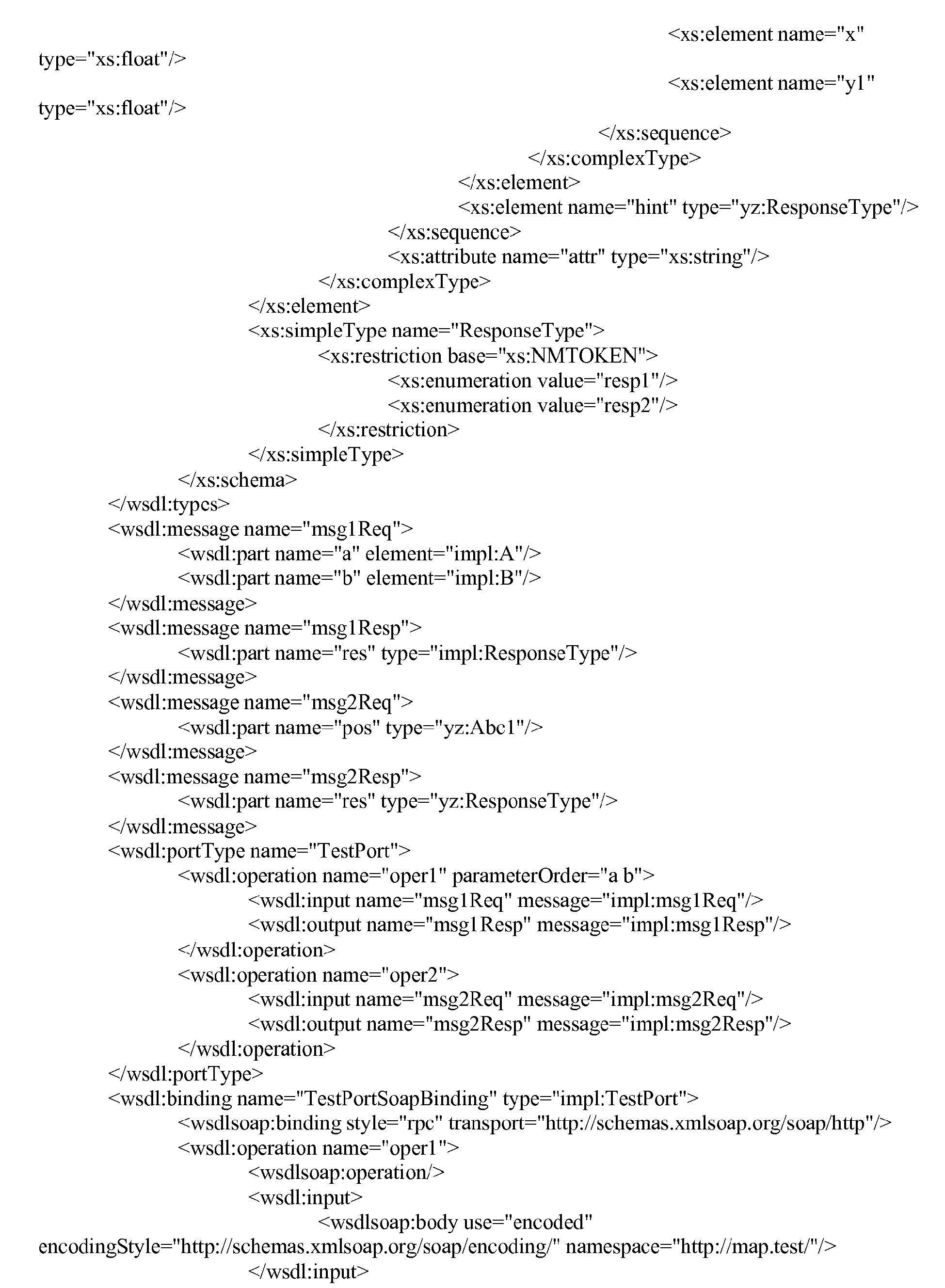

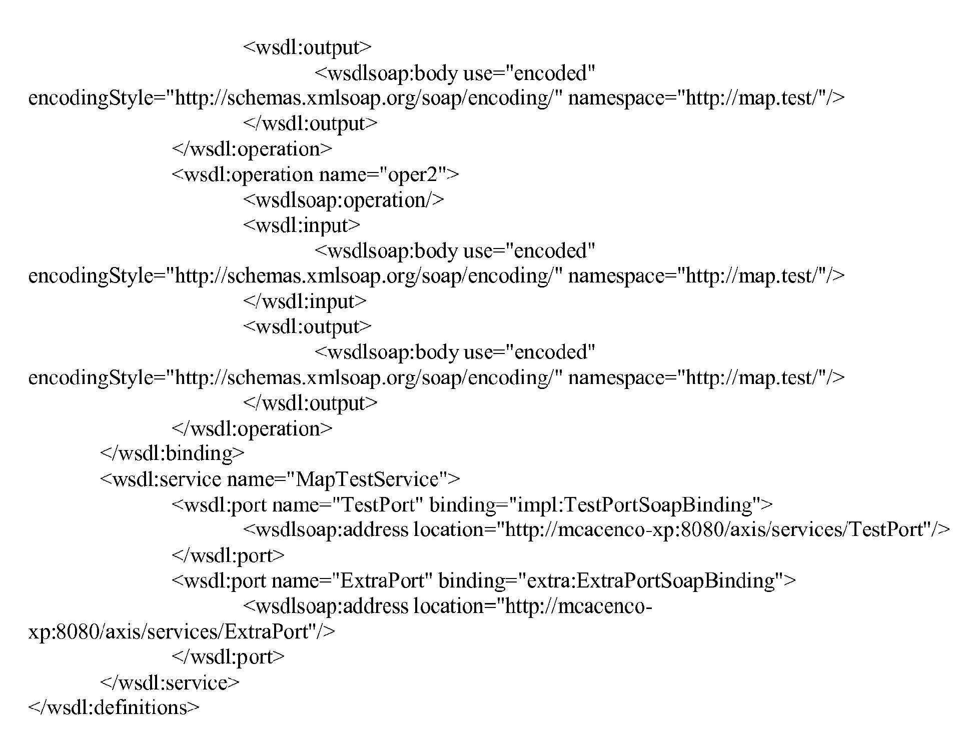

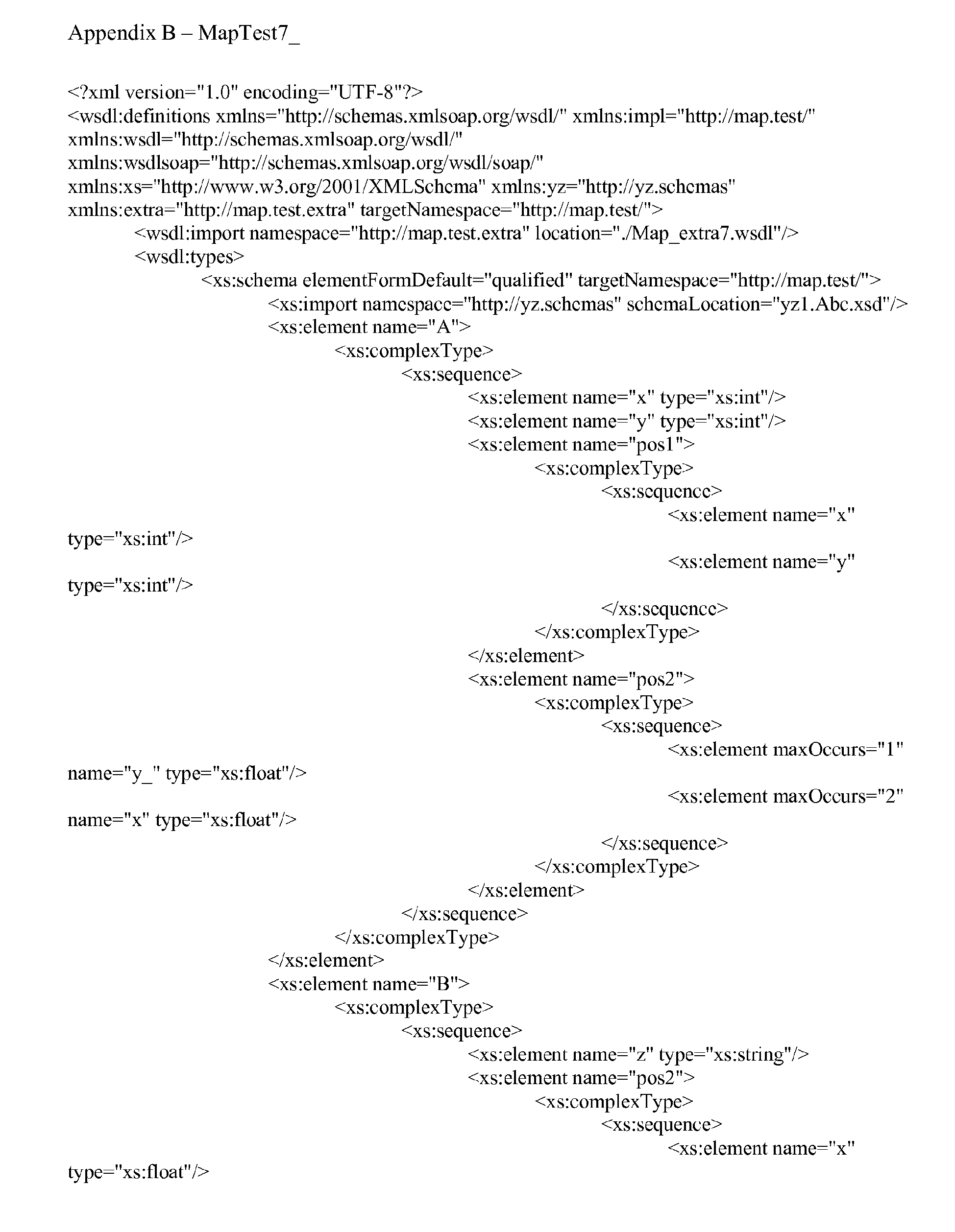

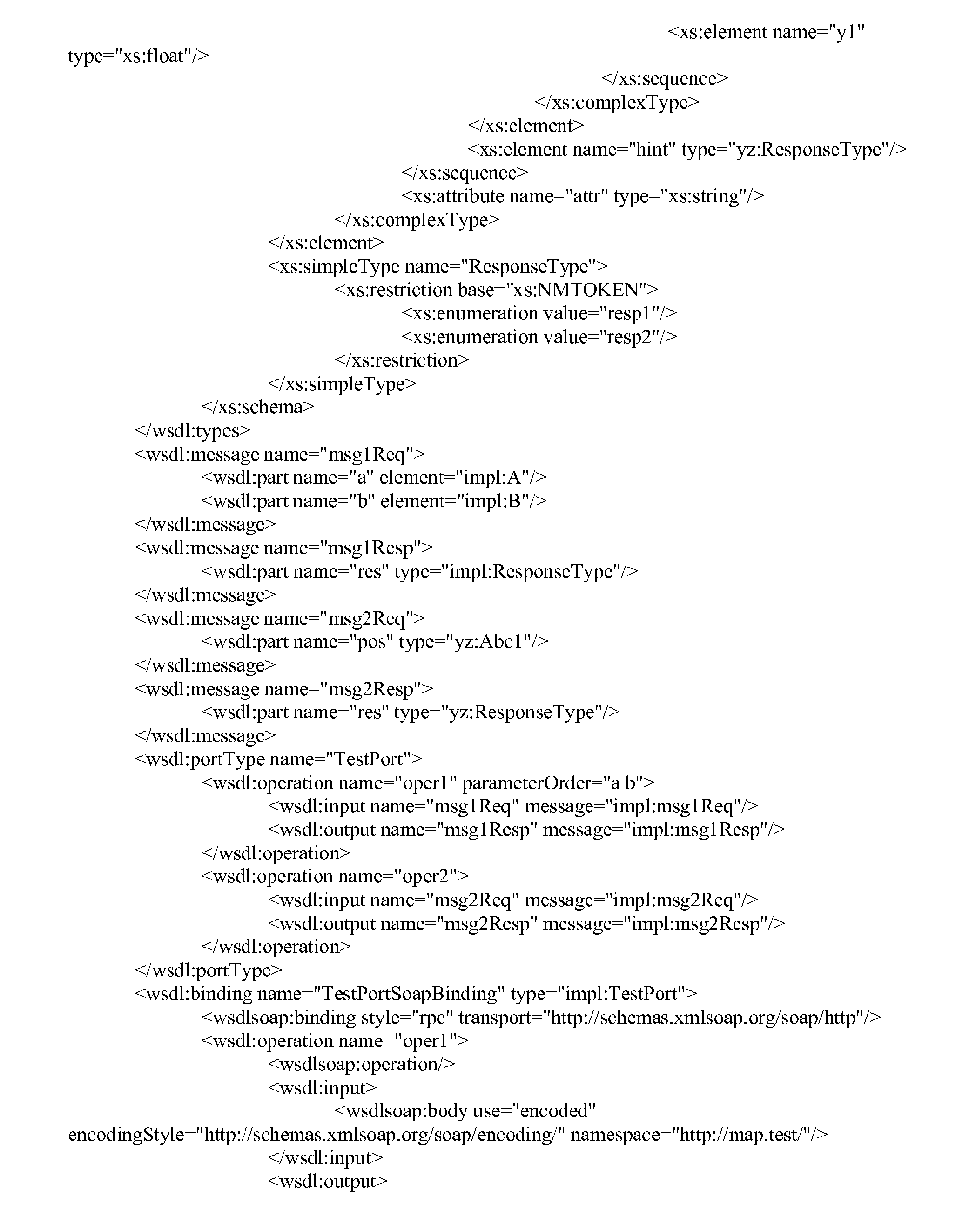

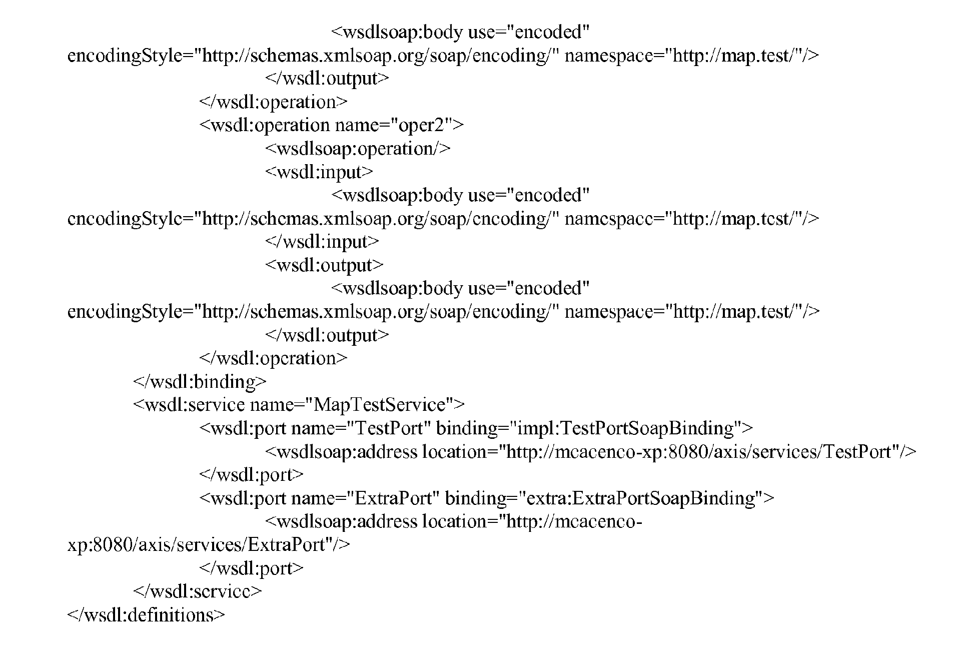

## Claims

1. A data-source update module for executing in combination with an application design tool for facilitating updating a component application that reflects a current data-source description document, the data-source update module comprising a software module configured to:
a) identify one or more differences between the current data-source description document and a new data-source description document; and
b) automatically update components of the component application affected by the differences in the new data-source document.

2. The module of claim 1 wherein the software module is further configured to present the identified differences to a developer for acceptance or rejection and automatically update the components related to differences accepted by the developer.

3. The module of claim 2 wherein the software module is further configured to delete the components related to differences rejected by the developer.

4. The module of claim 2 wherein the software module is further configured to present the developer with a list of additions in the new data-source description document so that the developer can program corresponding application components.

5. The module of claim 4 wherein the developer manually programs the corresponding application components.

6. The module of claim 4 wherein the corresponding application components are automatically generated by the application design tool from the data-source description document.

7. The module of claim 4, wherein the data-source description document conforms with a Web Services Description Language standard.

8. The module of claim 1, wherein the software module is a program wizard.

9. A method for automatically updating a component application that reflects a current data-source description document, the method comprising the steps of:
a) identifying one or more differences between the current data-source description document and a new data-source description document; and
b) automatically updating components of the component application affected by the differences in the new data-source document

10. The method of claim 9 further comprising the steps of presenting the identified differences to a developer for acceptance or rejection and automatically updating the components related to differences accepted by the developer.

11. The method of claim 10 further comprising the step of deleting the components related to differences rejected by the developer.

12. The method of claim 10 further comprising the step of presenting the developer with a list of additions in the new data-source description document so that the developer can program corresponding application components.

13. The method of claim 12 wherein the developer manually programs the corresponding application components.

14. The method of claim 12 wherein the corresponding application components are automatically generated by the application design tool from the data-source description document.

15. The method of claim 12, wherein the data-source description document conforms with a Web Services Description Language standard.
